# EUROPÄISCHE PATENTSCHRIFT

(11) **EP 0 615 869 B1**
(45) Veröffentlichungstag und Bekanntmachung des Hinweises auf die Patenterteilung: **06.11.1996**
(21) Anmeldenummer: 94101682.6
(22) Anmeldetag: 04.02.1994
(51) Int. Cl.: B60G 11/10

(54) **Lagerbock für eine wartungsfreie Befestigung des endseitigen Auges einer Blattfeder in Kraftfahrzeugen, insbesondere Nutzfahrzeugen**
Support bracket for maintenance free mounting of the leaf spring mounting eye in automotive vehicles, in particular commercial vehicles
Support pour une fixation sans entretien de l'oeillet d'un ressort à lame dans des voitures automobiles, notamment des véhicules utilitaires

(30) Priorität: 17.03.1993 AT 517/93
(43) Veröffentlichungstag der Anmeldung: 21.09.1994
(73) Patentinhaber: STEYR NUTZFAHRZEUGE AG, A-4400 Steyr (AT)
(72) Erfinder: Wenzl, Kurt, Dipl.-Ing., A-4048 Puchenau (AT); Wunderlich, Walter, Dipl.-Ing., A-4441 Behamberg (AT); Burgholzer, Johann, A-4442 Kleinraming (AT)

(56) Entgegenhaltungen:
- US-A- 1 545 299
- US-A- 2 299 392
- US-A- 2 316 439
- REIMPELL, JÖRNSEN 'Fahrwerktechnik, Radaufhängungen' 1988 , VOGEL VERLAG , WüRZBURG * Seite 44 *

## Beschreibung

Die Erfindung betrifft einen Lagerbock für eine Befestigung des endseitigen Auges einer Blattfeder in Kraftfahrzeugen, insbesondere Nutzfahrzeugen, mit Merkmalen der im Oberbegriff des Anspruches 1 angegebenen Art.

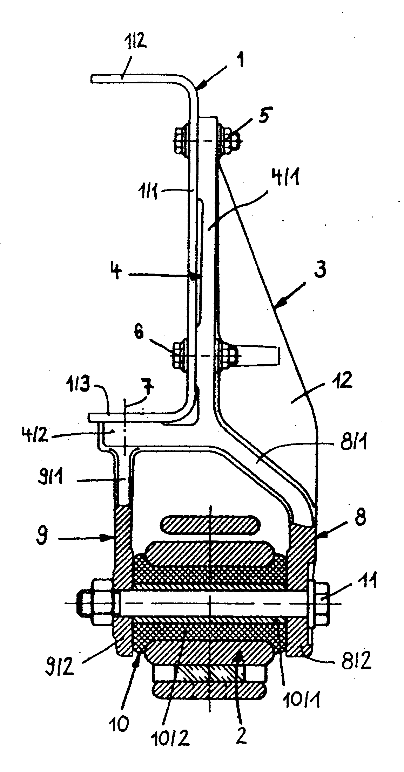

US-PS 1, 600, 953 zeigt einen dort in Fig. 8 dargestellten Lagerbock. Dieser weist oben einen L-förmigen Stützbügel, mit dem er an einem Rahmen-Längsträger abgestützt und befestigt ist, sowie ein sich unten am Stützbügel anschließendes gabelförmige Maul auf, zwischen dessen beiden Schenkeln mittels einer durchgehenden Spannschraube das endseitige Auge einer Blattfeder befestigt ist. Die beiden Schenkel des Lagerbockes sind praktisch gleich ausgebildet, nehmen also Längs-, Quer- und Vertikalkräfte zu gleichen Teilen auf und sind mithin beide als unnachgiebig zu bezeichnen. Um eine weitgehende Wartungsfreiheit zu erzielen, sind beiderseits des Federauges Druckfedergruppen angeordnet, die das Federauge symmetrisch zwischen den beiden Lagerbock-Schenkeln zentrieren und von eigenen Federgehäusen umgeben sind, welche zum Schutz der solchermaßen umschlossenen Druckfedergruppen dienen. Diese Lösung zur Fixierung des Federauges und zur Erzielung einer entsprechenden Wartungsfreiheit ist äußerst aufwendig und teuer.

Eine andere Art von Lagerbock entsprechend dem Oberbegriff des Anspruchs 1 ist aus dem Fachbuch 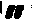 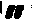 REIMPELL/Fahrwerktechnik, Radaufhängungen, 1988 Vogel-Verlag Würzburg, Seite 44" bekannt. Der dortige Lagerbock ist speziell daraufhin ausgestaltet, aus mehreren miteinander durch Punktschweißen zu verbindende Blechteilen zusammengesetzt werden zu können. Diese Herstellungsart für den Lagerbock ist sehr zeitaufwendig und teuer.

Ausgehend von den sich aus dem Stand der Technik ergebenden Nachteilen ist es Aufgabe der Erfindung, für eine wartungsfreie Befestigung des endseitigen Auges einer Blattfeder ein möglichst einfaches und billiges Federaugenlager verwenden zu können, das ohne Zuhilfenahme weiterer Mittel durch eine einzige Spannschraube im Lagerbock verdrehungsgesichert befestigbar ist.

Diese Aufgabe ist erfindungsgemäß durch einen Lagerbock der im Anspruch 1 angegebenen Art gelöst.

Vorteilhafe Ausgestaltungen dieser Lösung sind in den Unteransprüchen angegeben.

Aufgrund der erfindungsgemäßen Ausgestaltung des Lagerbockes, nämlich das Vorsehen eines gegenüber dem anderen einen partiell schwächeren Querschnitt aufweisenden Schenkels, der somit begrenzt quernachgiebig ist, ist es möglich geworden, ein vergleichsweise einfaches Federaugenlager zu verwenden und dieses über sein Zentralteil fest und verdrehsicher, damit verschleiß- und wartungsfrei mittels einer einzigen durchgehenden Spannschraube im Lagerbock zu befestigen.

Der Lagerbock selbst ist einfach und billig, z.B. durch ein Gußteil herstellbar. Das Federauge mit dem Federaugen-Lager ist außerdem einfach und schnell in diesem Lagerbock montierbar. Im übrigen ist durch die Ausbildung der beiden Lagerbock-Schenkel sichergestellt, daß alle im Fahrbetrieb auftretenden Quer-, Längs- und Vertikalkräfte sicher aufgenommen werden.

Insgesamt gesehen ergibt sich somit mit dem erfindungsgemäßen Lagerbock eine vergleichsweise billige Lösung für die wartungsfreie Befestigung eines endseitigen Blattfeder-Auges in Kraftfahrzeugen.

Nachfolgend ist der erfindungsgemäße Lagerbock anhand eines in der Zeichnung dargestellten Ausführungsbeispieles näher erläutert.

In der Zeichnung ist mit 1 ein Rahmen-Längsträger eines Kraftfahrzeuges bezeichnet, der im dargestellten Beispiel einen U-förmigen Querschnitt, demzufolge einen Vertikalsteg 1/1 sowie einen oberen Quersteg 1/2 und einen unteren Quersteg 1/3 aufweist. An diesem Rahmen-Längsträger 1 ist der für eine wartungsfreie Befestigung des endseitigen Auges 2 einer desweiteren nicht dargestellten Blattfeder des Kraftfahrzeuges dienende Lagerbock 3 abgestützt und befestigt.

Der Lagerbock 3 ist einteilig ausgebildet. Er weist oben einen Stützbügel 4 auf, mit dem er außen anliegend am Rahmen-Längsträger sicher abgestützt und befestigbar ist. Der Stützbügel 4 hat vorzugsweise eine L-Form und ist mit dem L-Vertikalschenkel 4/1 außen am Vertikalsteg 1/1 des Rahmen-Längsträgers 1 abgestützt sowie über Schraubverbindungen 5, 6 am Vertikalsteg 1/1 des Rahmen-Längsträgers 1 befestigt. Mit seinem unteren L-Querschenkel 4/2 ist der Stützbügel 4 unten am Quersteg 1/3 des Rahmen-Längsträgers 1 abgestützt und dort erforderlichenfalls auch angeschraubt, was nur durch die strichpunktierte Linie 7 angedeutet ist.

Darüberhinaus ist am Stützbügel 4 unten eine Gabelung mit ungleich starken Schenkeln 8, 9 gegeben. Dabei ist generell einer der beiden Lagerbock-Schenkel 8, 9, insbesondere der äußere 8, querschnittsmäßig so massiv ausgebildet, daß er den überwiegenden Anteil der im Betrieb auftretenden Querkräfte aufnehmen kann. Der andere der beiden Lagerbock-Schenkel 8, 9, insbesondere der innere 9, ist zumindest partiell querschnittsmäßig schwächer ausgebildet und dadurch so quernachgiebig, daß er bei der Befestigung des innerhalb des Blattfeder-Auges 2 gegebenen Federaugenlagers 10 ohne Querschnitts-Überbeanspruchung im Elastizitätsbereich einwärts, d.h. auf den gegenüberliegenden Lagerbock-Schenkel 8 zu bewegt und über ihn mit einer durchgehenden Spannschraube 11 bei deren Anziehen eine vorgegebene, genügend große Vorspannung auf das verdrehsicher festzuspannende Zentralteil 10/1 des Federaugenlagers 10 übertragen werden kann. Die im Betrieb auftretenden Längs- und Vertikalkräfte hingegen werden von beiden Lagerbock-Schenkeln 8, 9 zu annähernd gleichen Teilen aufgenommen.

Der äußere, insbesondere querschnittsstärkere Lagerbock-Schenkel 8 besteht aus einem unten am Stützbügel 4 schräg nach außen unten abgehenden Abschnitt 8/1 beispielsweise mit T-, Doppel-T oder U-Querschnitt und einem sich daran unten anschließenden vertikalen, zur äußeren Abstützung des Federaugenlagert 10 dienenden Abschnitt 8/2 mit durchgehend massivem Querschnitt.

Der innere, insbesondere quernachgiebige Lagerbock-Schenkel 9 schließt sich am Stützbügel 4 vertikal nach unten gerichtet an, wobei der obere Schenkel-Abschnitt 9/1 jenen Querschnitt, der die gewünschte Querelastizität ermöglicht, und der untere Schenkel-Abschnitt 9/2, der zur inneren Abstützung des Federaugenlagers 10 dient, einen massiven Querschnitt aufweist.

Vorzugsweise schließt sich der innere, insbesondere quernachgiebige Lagerbock-Schenkel 9 unten am L-Querschenkel 4/2 des Stützbügels 4 zu dessen freiem Ende hingerückt an, während der äußere, insbesondere querschnittsstärkere Lagerbock-Schenkel 8 vom am Übergang zwischen L-Vertikal-und L-Querschenkel 4/1, 4/2 gegebenen Eckbereich des Stützbügels 4 abgeht.

Zur Erhöhung seiner Stabilität im Hinblick auf die Aufnahme der Quer-und Vertikalkräfte kann der Lagerbock 3 durch eine zwischen querschnittsstärkerem Lagerbock-Schenkel 8 und Stützbügel 4 gegebene Rippe 12 versteift sein.

Im dargestellten Ausführungsbeispiel ist in Verbindung mit dem erfindungsgemäßen Lagerbock 3 ein Federaugenlager 10 verwendet, das aus einer äußeren Hülse 10/2 aus elastischem Material, insbesondere Gummi, sowie einer in diese einvulkanisierten inneren Hülse 10/1, insbesondere aus Metall, besteht und ins Auge 2 der Blattfeder eingepreßt ist. Die innere Hülse 10/1 hat im unverspannten Zustand eine solche axiale Länge, daß sie bei der Montage des Federaugenlagers 10 gerade zwischen die beiden Schenkel 8, 9 des Lagerbockes 3 paßt. Nach Durchführung der Spannschraube 11 durch die beiden mit entsprechenden Durchgangsbohrungen versehenen Schenkel 8, 9 des Lagerbockes 3 und die zentrale Durchgangsbohrung des Federaugenlagers 10 wird durch Anziehen der Spannschraube 11 über den nachgiebigen Lagerbock-Schenkel 9 jene Vorspannkraft aufgebracht, die nötig ist, um die innere Hülse 10/1 verdrehsicher zwischen den beiden Lagerbock-Schenkeln 8, 9 festzuspannen.

## Patentansprüche

1. Lagerbock für eine Befestigung des endseitigen Auges einer Blattfeder in Kraftfahrzeugen, insbesondere Nutzfahrzeugen, der einteilig ausgebildet und an einem Rahmen-Längsträger (1) befestigt ist und ein nach unten offenes Maul aufweist, in dem mittels einer durchgehenden Spannschraube (11) ein Federaugenlager (10) befestigt ist, wobei das Maul unten an einem L-förmigen Stützbügel (4) gegeben ist, der mit seinem, L-Vertikalschenkel (4/1) außen am Vertikalsteg (1/1) eines Rahmen-Längsträgers (1) und mit seinem unteren L-Querschenkel (4/2) unten am Quersteg (1/3) des Rahmen-Längsträgers (1) abgestützt und befestigt ist, dadurch gekennzeichnet, daß das Maul des Lagerbockes (3) seitlich durch zwei Schenkel (8, 9) ungleichen Querschnitts begrenzt ist, von denen der äußere Schenkel (8) aus einem am Eckbereich des L-förmigen Stützbügels (4) schräg nach außen unten abgehenden oberen Abschnitt (8/1) und einem sich daran unten anschließenden vertikalen, zur äußeren Abstützung des Zentralteils (10/1) des Federaugenlagers (10) dienenden Abschnitt (8/2) besteht und sich der innere Schenkel (9) unten am L-Querschenkel (4/2) des Stützbügels (4), zu dessen freiem Ende hin gerückt, vertikal nach unten gerichtet anschließt, wobei derjenige Schenkel (8 bzw. 9) mit dem schwächeren Querschnitt begrenzt derart quernachgiebig ist, daß er bei Befestigung des Federaugenlagers (10) durch die Spannschraube (11) bei deren Anziehen ohne Querschnitts-Überbeanspruchung im Elastizitätsbereich in Richtung des anderen, unnachgiebigen Lagerbock-Schenkels ausgelenkt und so über ihn eine vorgegebene, genügend große Vorspannung auf das solchermaßen verdrehsicher festzuspannende hülsenförmige Zentralteil (10/1) des Federaugenlagers (10) übertragen wird.

2. Lagerbock nach Anspruch 1, dadurch gekennzeichnet, daß dessen beide Schenkel (8, 9) hinsichtlich ihres Querschnittes auf die Aufnahme der Längs- und Vertikalkräfte zu annähernd gleichen Teilen ausgestaltet sind und daß der eine, unnachgiebige Schenkel (8) dadurch querschnittsmäßig für die Aufnahme des überwiegenden Anteils der im Fahrbetrieb auftretenden Querkräfte ausgebildet ist, daß zwischen dem oberen schrägen Abschnitt (8/1) des äußeren Lagerbock-Schenkels (8) und dem L-Vertikalschenkel (4/1) des Stützbügels (4) eine Lagerbock-Versteifungsrippe (12) angeordnet ist.

3. Lagerbock nach einem der Ansprüche 1 oder 2, dadurch gekennzeichnet, daß der schräge obere Abschnitt (8/1) des äußeren Lagerbock-Schenkels (8) einen T-, Doppel-T-, oder U-Querschnitt aufweist und der untere vertikale Teil (8/2) des Lagerbock-Schenkels (8) plattenförmig ausgebildet ist.

4. Lagerbock nach einem der Ansprüche 1 oder 2, dadurch gekennzeichnet, daß der innere Lagerbock-Schenkel (9) der begrenzt quernachgiebige ist und dieser einen oberen Abschnitt (9/1) mit einem die gewünschte Querelastizität ermöglichenden Querschnitt sowie einen unteren Abschnitt (9/2) mit einer plattenförmigen Ausbildung aufweist.

5. Lagerbock nach Anspruch 1, gekennzeichnet durch dessen Verwendung in Verbindung mit einem Federaugenlager (10), das aus einer äußeren Hülse (10/2) aus elastischem Material, insbesondere Gummi, sowie einer in diese einvulkanisierten, das Zentralteil bildenden inneren Hülse (10/1), insbesondere aus Metall, besteht und mit seiner äußeren Hülse (10/2) ins Auge (2) der Blattfeder eingepreßt ist, wobei bei Montage dieses Federaugenlagers (10), um dessen Innenhülse (10/1) verdrehsicher zwischen beiden Lagerbock-Schenkeln (8, 9) festzuspannen, nach Durchführung einer Spannschraube (11) durch die in beiden Lagerbock-Schenkeln (8, 9) zueinander fluchtend gegebenen Durchgangsbohrungen und die zentrale Durchgangsbohrung der inneren Hülse (10/1), bei Anziehen der Spannschraube (11) über den nachgiebigen Lagerbock-Schenkel (8 bzw. 9) die erforderliche Vorspannkraft auf die Innenhülse (10/1) des Federaugenlagers (10) übertragbar ist.

## Claims

1. Bearing mount for the attachment of the eye at the end of a leaf spring in motor vehicles, particularly in commercial vehicles, which bearing mount is in a single piece, is attached to a frame longitudinal member (1) and has a jaw open towards the lower end, in which jaw a spring-eye mount (10) is fastened by means of a continuous clamping bolt (11), the lower end of the jaw being provided on an L-shaped support bow (4), of which the vertical arm (4/1) of the L is supported on and attached to the outside of the vertical web (1/1) of a frame longitudinal member (1) and the lower horizontal arm (4/2) of the L is supported on and attached to the lower horizontal web (1/3) of the frame longitudinal member (1), characterised in that the jaw of the bearing mount (3) is laterally limited by two arms (8, 9) of unequal cross section, of which arms the outer arm (8) consists of an upper section (8/1) which is provided at the corner area of the L-shaped support bow (4) and points outwards at an angle and downwards and of a vertical section (8/2) which is attached at the lower end of said upper section (8/1) and is designed to support the central part (10/1) of the spring-eye mount (10) on the outside, and that the vertical, downward-pointing inner arm (9) located towards the free end of said support bow (4) is attached to the lower side of the horizontal arm (4/2) of the L-shaped support bow (4), that arm (8 or 9) with the thinner cross section being restrictedly flexible in transverse direction so that when during the attachment of the spring-eye mount (10) by means of the clamping bolt (11) said bolt (11) is being tightened without an excessive strain being exerted on the cross section in the elasticity area said arm (8 or 9) is moved in the direction of the other, inflexible bearing-mount arm and that a preset, sufficiently large initial tension is thus transferred to the sleeve-shaped central piece (10/1) of the spring-eye mount (10) via said arm (8 or 9), which central piece (10/1) is to be clamped so as to prevent it from turning.

2. Bearing mount according to Claim 1, characterised in that with regard to their cross section the two arms (8, 9) are designed for absorbing longitudinal and vertical forces in approximately identical proportions and that, with regard to its cross section, the one, inflexible arm (8) is insofar designed for taking up the larger proportion of transverse forces occurring whilst the vehicle is in motion that a bearing-mount reinforcement rib (12) is provided between the upper oblique section (8/1) of the outer bearing-mount arm (8) and the vertical arm (4/1) of the L-shaped support bow (4).

3. Bearing mount according to one of the Claims 1 or 2, characterised in that the oblique upper section (8/1) of the outer bearing-mount arm (8) has a T-, double T- or U-shaped cross section, and the lower, vertical part (8/2) of the bearing-mount arm (8) is of plate-type design.

4. Bearing mount according to one of the Claims 1 or 2, characterised in that the inner bearing-mount arm (9) is restrictedly flexible in transverse direction and has an upper section (9/1) with a cross section endowed with the cross-section elasticity required and a lower section (9/2) of plate-type design.

5. Bearing mount according to Claim 1, characterised in that owing to the use of said bearing mount in conjunction with a spring-eye mount (10) consisting of an outer sleeve (10/2) made of elastic material, particularly rubber, and of an inner sleeve (10/1) made particularly of metal, vulcanised into said outer sleeve and forming the central part and in that said spring-eye mount (10) is pressed with its outer sleeve (10/2) into the eye (2) of the leaf spring, whereby in order to clamp its inner sleeve (10/1) between both bearing-mount arms (8, 9) so that it will not turn the necessary initial tension can during the assembly of this spring-eye mount (10) be transferred to the inner sleeve (10/1) of the spring-eye mount (10) via the flexible bearing-mount arm (8 or 9) by means of tightening the clamping bolt (11) after it has been pushed through the passage bores aligned with each other and provided in the two bearing-mount arms (8, 9) and through the central passage bore in the inner sleeve (10/1).

## Revendications

1. Palier servant à la fixation de rouleau ou l'oeil situé à l'extrémité d'un ressort à lame d'un véhicule automobile, en particulier d'un véhicule utilitaire, constituée d'une seule pièce fixée à un longeron porteur de châssis (1) et comportant une fourche, ouverte vers le bas, dans laquelle un palier de rouleau ou d'oeil de ressort (10) est fixé par une vis de serrage traversante (11), la fourche étant montée sous un étrier d'appui (4) en forme de L dont la branche verticale (4/1) est fixée en appui sur la face externe de la branche verticale (1/1) du longeron (1) tandis que la branche verticale (4/2) de la fourche est fixée en appui sous la branche transversale inférieure (1/3) du longeron (1), caractérisé en ce que :
- la fourche du palier (3) est délimitée latéralement par deux branches (8, 9) de sections inégales,
- la branche externe (8) de la fourche, partant en descendant de l'angle de l'étrier d'appui en L (4), comprend une partie oblique vers l'extérieur (8/1) suivie d'une partie verticale (8/2) servant d'appui extérieur à la pièce centrale (10/1) du palier du rouleau ou d'oeil de ressort (10),
- la branche interne (9) de la fourche, située sous la branche transversale de l'étrier d'appui en L (4) part de son extrémité avec décalage vers l'intérieur et descend verticalement,
- la branche (8, 9) à plus faible section présente une flexibilité transversale limitée à une valeur telle que lors de la fixation du palier d'oeil de ressort (10) par la vis (11) le serrage de cette vis fasse fléchir cette branche en maintenant à l'intérieur du domaine d'élasticité la contrainte subie par sa section, en direction de l'autre branche non flexible du palier et qu'ainsi une tension initiale donnée, suffisante, soit transmise à la pièce centrale (10/1), en forme de douille appartenant au palier de rouleau ou oeil de ressort qu'il s'agit de bloquer en rotation.

2. Palier selon la revendication 1,
caractérisé en ce que
ses deux branches (8, 9) ont des sections telles qu'elles encaissent à peu près également entre elles les forces longitudinales et verticales tandis que la branche (8) non flexible a une section prévue pour encaisser la plus grande partie des forces transversales apparaissant en circulation, à savoir qu'il est prévu, entre la partie supérieure oblique (8/1) de la branche externe (8) du palier et la branche verticale (4/1) du L de l'étrier d'appui, une nervure de rigidification (12) du palier.

3. Palier selon une des revendications 1 ou 2,
caractérisé en ce que
la partie supérieure oblique (8/1) de la branche externe (8) de la chaise, présente une section en T, en double T ou en U, tandis que la partie verticale inférieure (8/2) de la branche (8) a la forme d'une plaque.

4. Chaise de palier selon une des revendications 1 ou 2,
caractérisée en ce que
la branche interne (9) de la chaise, à flexibilité transversale limitée, présente, au niveau de sa partie supérieure (9/1) une section assurant la flexibilité transversale désirée, tandis que sa partie inférieure (9/2) a la forme d'une plaque.

5. Palier selon la revendication 1 présentant les caractéristiques suivantes :
- il est utilisé avec un palier de rouleau ou oeil de ressort (10) constitué d'une douille externe (10/2) en matériau élastique, en particulier du caoutchouc, vulcanisé sur une douille interne (10/1) constituant la partie centrale, faite en particulier de métal, la douille externe (10/2) étant montée à force dans le rouleau ou oeil (2) du ressort à lame,
- lors du montage du palier du palier de ressort (10), pour obtenir le blocage en rotation de sa douille interne (10/1) entre les deux branches (8, 9) du palier, on introduit une vis de serrage (11) à travers les deux trous percés en alignement dans les branches (8, 9) et à travers l'alésage central de la douille interne (10/1),
- le serrage de la vis (11) permet, par l'intermédiaire de la branche flexible (8 ou 9) du palier de créer dans la douille interne (10/1) du palier de rouleau de ressort, la tension initiale nécessaire.
